# EUROPEAN PATENT APPLICATION

(11) **EP 3 260 184 A1**
(43) Date of publication of application: **27.12.2017**
(21) Application number: 16752010.5
(22) Date of filing: 15.02.2016
(51) Int. Cl.: B01D 53/02, B01D 53/62, B65D 81/28, A23B 7/152

(54) **FOOD PRESERVATION SYSTEM AND METHOD FOR THE USE THEREOF**

(30) Priority: 17.02.2015 CO 15034370
(71) Applicant: Villegas Osorio, Monica Patricia, Antioquia (CO); Villegas Osorio, Isabel Cristina, Antioquia (CO)
(72) Inventor: Villegas Osorio, Monica Patricia, Antioquia (CO); Villegas Osorio, Isabel Cristina, Antioquia (CO)
(74) Representative: ABG Patentes, S.L.
(86) International application number: PCT/IB2016/050800
(87) International publication number: WO 2016/132277

(57) **Abstract**

The present invention provides a system for the preservation of food and a method of application thereof For that purpose, it presents a device for capturing gases using the phenomenon known as adsorption, geared toward the configuration of a system for the preservation of food during storage and transport, although it is not limited to other applications that similarly require gas capture in closed containers. The device comprises in its most general form: a plurality of mineral layers that selectively adsorb carbon dioxide, a plurality of mineral layers that selectively adsorb ethylene gases, a plurality of mineral layers that selectively adsorb oxygen, and a plurality of mineral layers that selectively adsorb humidity.

## Description

### Field of the Invention

The present invention generally relates to systems and methods for the preservation of food, and specifically relates to a system and methods for the extension of the shelf life of food, mainly fruits.

### Prior Art

One third of the food produced on Earth spoils before being consumed by humans, according to statistics published by the FAO in 2014. This fact directly affects around one billion people worldwide, and constitutes a waste of labor, water, energy, land and other inputs used in the production of said foods. In the case of fruits, 54% of the waste is produced in the initial stages of production, handling and post-harvest storage, according to the study conducted by the FAO. The remaining 46% occurs in the processing, distribution and consumption stages thereof (Unep, 2014).

Fruit waste significantly contributes to water wastage in regions such as Asia, Europe and Latin America. Similarly, the large volumes of vegetable waste in the industrialized countries of Asia, Europe, and south and southeast Asia result in a sizable carbon footprint from this sector. Among the causes that increase the degradation of food, especially in the case of fruits (Unep, 2014).

A pivotal factor in food waste worldwide is the lack of effective systems and methods for preservation thereof. In the case of fruits, waste occurs due to factors such as respiration and ripeness, dehydration, sudden changes in temperature, mainly because of cold, mechanical damage, and the proliferation of fungal and bacterial microorganisms, among others. Several studies have proven that limiting the respiration of fruits slows down the ripening process, thereby increasing their shelf life as a result. Known methods for reducing said respiration traditionally include the reduction of the oxygen and ethylene content, while simultaneously inducing conditions that entail an increase in the carbon dioxide in the means used to contain the fruits. Inhibition of the respiratory processes of fruits, for example, delays the enzymatic reactions responsible for biochemical ripening, all while creating unfavorable conditions for fungal growth on the surface thereof.

Prior art includes several methods for the preservation of food, mainly fruits, that function by inhibiting respiration by means of controlling the gases present in the containers containing them. Specifically, WO 1997023138 A1 (July 1997) claims a method for the preservation of fresh fruits comprising the application of a polysaccharide gel coat (sodium alginate) and subsequent treatment with a solution of a hardening agent (calcium chloride), an anti-oxidant acid (ascorbic acid) and an acidulant (citric acid) in order to inhibit ripening. Then, the coated fruit is stored in a semipermeable package to maintain an atmosphere consisting of 2% to 10% oxygen around the fruit. However, this method entails a modification of the organoleptic properties of the fruit, mainly its flavor and texture, due to the addition of acidulant additives, which requires the food to undergo a washing process prior to consumption.

WO 2002069723 A2 (September 2002) claims a packaging for extending the shelf life of fruits by means of storage, in which the packaging comprises a gas permeable container and a device that modifies the atmosphere inside the container, which comprises a carbon dioxide source, an oxygen extractor, and optionally, an ethylene extractor. The food is stored in the container with the device. However, several studies show that high carbon dioxide levels lead to food deterioration by causing oxidative reactions that might negatively impact the quality of food products.

Therefore, these systems require the use of porous packaging in order to relieve the carbon dioxide pressure, which increases the cost of preservation. It is assumed that the addition of reactant elements, consisting of a carbonate and an organic acid for the production of carbon dioxide, would further increase the cost of preservation. Furthermore, the configuration of these devices requires a special chamber with semipermeable membranes at the bottom of the packaging.

WO 1999062790 A1 (December 1999) claims a device for preserving or modifying the atmosphere in a package suitable for beef, mutton, pork, etc. The device includes at least two layers containing a chemical substance activated by the humidity of the layers containing it, and at least one absorbent layer. The absorbent layer absorbs the humidity in the package. The humidity is then transferred from the absorbent layer in order to permeate through a micro-porous layer as water vapor and activate the chemical products. The gas produced by the chemical products then passes through the bag and into the atmosphere of the package. This modifies the atmosphere in a way that guarantees an appropriate amount of carbon dioxide, in order to achieve the desired shelf life for the packaged food.

Other preservation techniques, such as that found in US 5565230 A (October 1996), include the injection of inert gases into a bag-like package in order to create an atmosphere that favors the preservation of the foods contained therein. The bags are partially emptied about halfway, then air and an injection gas consisting of at least 30% carbon dioxide and N₂ at equilibrium are injected to fill the bags, which are then heat-sealed. This technique is assumed to be expensive, due to the need to acquire and manipulate gases, such as nitrogen.

By virtue of the above, the present invention provides a system for the preservation of food composed of a matrix for ethylene and carbon dioxide adsorption, placed at the top of a container, which unlike the disclosures in prior art, does not require the production of carbon dioxide, nor the placement of chambers for preservation, nor the injection of inert gases. In fact, several fruit experts have disclosed that accumulation of carbon dioxide in an atmosphere for fruit preservation leads to surface damage thereto. The proposed system is easily installed. Other elements and technical advantages of the present invention will be made clear in the detailed description and claims.

### Brief description of the Figures

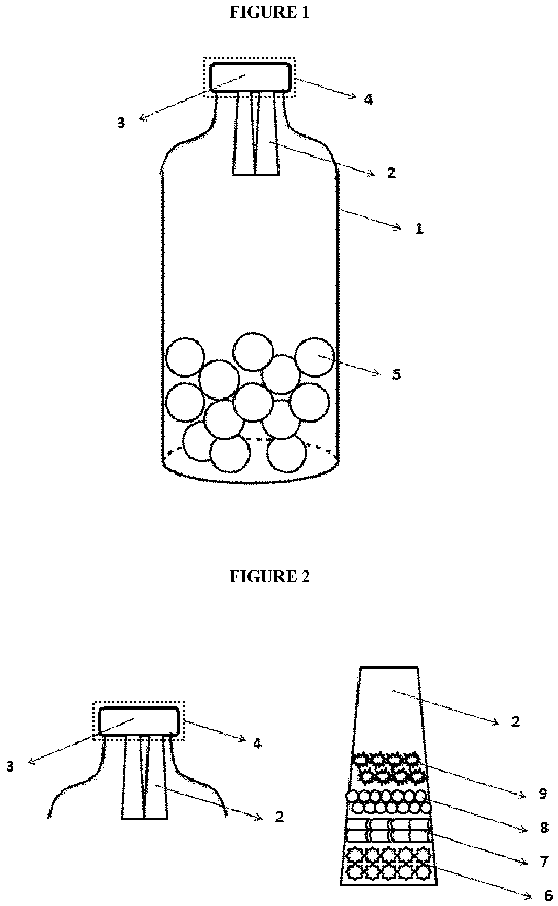

**Figure 1****:** Frontal view of one embodiment of the system of the present invention. It shows the container, the device for capturing gases, the lid and a layer of material coating it.
**Figure 2****:** Detailed view of the layers comprising the device for gas capture of the present invention.

### Detailed description of the invention

The present invention, according to its most relevant features, comprises a device for capturing gases (2) using the phenomenon known as adsorption, geared toward the configuration of a system for the preservation of foods during storage and transport, although it is not limited to other applications that similarly require gas capture in closed containers. The device comprises in its most general form: a plurality of mineral layers that selectively adsorb carbon dioxide (6), a plurality of mineral layers that selectively adsorb ethylene gases (7), a plurality of mineral layers that selectively adsorb oxygen (8), and a plurality of mineral layers that selectively adsorb humidity (9).

The present invention, in its essential features, provides a system for the preservation of food, which includes a closed container with a lid (1), which contains or holds the food to be stored (5). It is equipped with a device for gas capture by adsorption (2), as described above, to control the internal atmosphere of the container and maintain low levels of carbon dioxide gas, humidity, oxygen and ethylene primarily. The container is closed by means of a lid (4), to which the device for gas capture by adsorption described above is functionally attached. This functional attachment means that the device for gas capture may be fastened, glued or soldered to the lid while the system for the preservation of food is in use. In order to guarantee a water-tight seal and facilitate control of the atmosphere in the container, the system includes at least one layer of a material that coats the lid and the part of the container in the vicinity of the lid (3). This material can be made of plastic or metal, preferably plastic, due to its mechanical properties, cost and variety of applications.

Use of the present invention could result in extension of the shelf life of food, primarily fruits during ripening or post-harvest, which require storage and transport for their sale. The system developed herein allows food to remain fresh, reduces the need to include a cold chain, substantially reducing and preventing waste due to microbial degradation by fungi or bacteria.

In a preferred embodiment of the invention, the device for gas capture is composed of a plurality of mineral layers that selectively adsorb carbon dioxide, preferably those selected from the group comprising: activated carbon, crystalline zeolite, mesoporous silica, silica impregnated with polyethylenimine, silica impregnated with tetraethylenepentamide, silica impregnated with amines, aminosilanes, single-walled carbon nanotubes, multi-walled carbon nanotubes, graphene, polymethylmethacrylate, and combinations thereof.

In a preferred embodiment of the invention, the plurality of mineral layers that selectively adsorb ethylene are selected from the group comprising: calcium oxide, modified alumina, zeolite, zeolite impregnated with permanganates, activated carbon, and combinations thereof.

In another aspect of the present invention, a system for the preservation of food is provided, comprising:
a. A closed container with a lid, which contains the food to be preserved;
b. At least one device for gas capture by adsorption as described above, in order to control the atmosphere surrounding the food;
c. A lid for the container, allowing it to be closed, and to which the device for gas capture by adsorption described above is functionally attached;
d. A1 least one layer of material that coats the lid and the part of the container in the vicinity of the lid, in order to affix the lid and maximize the water-tight or hermetic seal of the system; in other embodiments of the invention, it would also guarantee that the contents of the container have been enclosed and have not had any contact with the external environment since their packaging.

In another aspect of the present invention, the device for gas capture by adsorption is attached to the lid inside the container.

In a preferred embodiment of the present invention, the material used to construct the container is selected from the group comprising: glass, plastic, metal, cardboard, paper, and combinations thereof.

In another aspect of the present invention, a method for the preservation of food is provided, comprising:
a. placing the food to be preserved in a closed container;
b. providing a device for gas capture by adsorption, such as that described in the present invention;
c. providing a lid for the container, previously attaching the device for gas capture by adsorption thereto, and thereby creating a closed atmosphere for the preservation of food;
d. closing the container with the lid;
e. providing at least one layer of material that coats the lid and the part of the container in the vicinity of the lid in order to guarantee a water-tight or hermetic seal and provide proof thereof;
f. placing the container in thermal conditions ranging from 2 to 20°C, using a refrigeration system or room temperature conditions, with the aim of maximizing food preservation.

For the purposes of the present invention, adsorption is the capture or trapping of a molecule of gas on the surface of a solid.

For the purposes of the present invention, a mineral is a ceramic material, composed of metal and non-metal atoms, which can functionally bond to at least one organic molecule, primarily composed of carbon, hydrogen, oxygen, nitrogen and sulfur atoms.

For the purposes of the present invention, activated carbon is a generic term describing a family of highly crystalline carbonaceous adsorbents with a high degree of internal porosity.

For the purposes of the present invention, a carbon nanotube is a tubular carbon structure, the diameter of which is equal to a nanometer. These are formed as if the edges of a sheet were attached to form a tube. These tubes are labeled single-walled or multi-walled, according to the number of rolled layers.

### Example of the preferred embodiment

The present invention was tested to verify its technical usefulness. For that purpose, a case study on the preservation of a sample of Cape gooseberry fruit (*uchuva*), grown in the eastern region of the Department of Antioquia (Colombia), was performed.

A preferred embodiment of the food preservation system of the present invention was used, wherein the container is made of translucent glass, equipped with a metal lid made of aluminum, to the bottom of which a device for gas capture, composed of the following elements, is attached:
a. a plurality of mineral layers of mesoporous silica that selectively adsorb carbon dioxide;
b. a plurality of mineral layers of zeolite and alumina that selectively adsorb ethylene;

The device for gas capture does not come into contact with the Cape gooseberry, and is attached to the bottom side of the lid by means of glue.

In order to prove the efficacy of the system, a control was used, consisting of a container-lid system made from the same materials as above, excluding the device for gas adsorption of the present invention.

The Cape gooseberry to be preserved remained in post-harvest for 26 hours before being husked and packaged. In both cases, the fruit was placed in a package for 30 days, at a constant temperature of 3-4°C.

Table 1 summarizes the results achieved with both systems.

**Table 1. State of the fruit inside the package; assays: Control and E.6.1**

| **Standard of the Assay** | **Control** | **System of the present invention (Assay E.6.1)** |
|---|---|---|
| **Pressurization by Gases during the Assay** | **Yes** | **No** |
| **Visible Loss of Volume** | **Yes** | **Yes** |
| **Organoleptic Properties** | | |
| *-Fresh Taste (According to a taste test)* | **No** | **Yes** |
| *-Vinegar Taste (According to a taste test)* | **Yes** | **No** |
| *-Soft Consistency (Vinegar, poor condition)* | **Yes** | **No** |
| **Percentage of fruit in good condition** | **<20%** | **97.7%** |
| **Presence of water in the container** | **Yes (5 mL)** | **No** |
| **Presence of split fruit** | **Yes** | **No** |
| **Days in the packaging** | **30** | **30** |

In assay E.6.1, which used the present invention, the fruit retained its condition and fresh taste; it did not produce gas nor water, its texture was firm, it began to split in the third week, however, only at an average rate of 4 fruits split per package per week, and the fruit began to decompose in the fourth week at an average rate of 1 to 2 fruits per package per week, which shows that the present invention allowed the fruit to be preserved in good condition for an average of 3 to 4 weeks, maximum 27 days. This system allows for the fruit to not produce any water, thereby maximizing the preservation of freshness until the fourth week.

In the Control assay, after 22 days, the fruit lost its volume, produced gas, had a soft texture, i.e. it lost water, had a vinegar taste, all occurring in the third week after packaging.

In assay E.6.1, the fruit was preserved in post-harvest for more than 27 days without any obvious degradation, retaining its organoleptic properties.

## Claims

1. A device for the capture of gases by adsorption, comprising:
a. a plurality of mineral layers that selectively adsorb carbon dioxide;
b. a plurality of mineral layers that selectively adsorb ethylene;
c. a plurality of mineral layers that selectively adsorb oxygen;
d. a plurality of mineral layers that selectively adsorb humidity;

2. The device in accordance with Claim 1, wherein the plurality of mineral layers that selectively adsorb carbon dioxide are selected from the group comprising:
activated carbon, crystalline zeolite, mesoporous silica, silica impregnated with polyethylenimine, silica impregnated with tetraethylenepentamide, silica impregnated with amines, aminosilanes, single-walled carbon nanotubes, multi-walled carbon nanotubes, graphene, polymethylmethacrylate, and combinations thereof.

3. The device in accordance with Claim 1, wherein the plurality of mineral layers that selectively adsorb ethylene are selected from the group comprising: calcium oxide, modified alumina, zeolite, zeolite impregnated with permanganates, activated carbon, and combinations thereof.

4. A system for the preservation of food, comprising:
a. A closed container with a lid, which contains the food to be preserved;
b. At least one device for gas capture by adsorption, such as that of Claim 1;
c. A lid for the container, to which the device for gas capture by adsorption described above is functionally attached;
d. At least one layer of material that coats the lid and the part of the container in the vicinity of the lid.

5. The system for the preservation of food in accordance with Claim 4, wherein the device for gas capture by adsorption is attached to the lid inside the container.

6. The container in accordance with Claim 4, wherein the construction material is selected from the group comprising: glass, plastic, metal, cardboard, paper, and combinations thereof.

7. A method for the preservation of food, comprising the following stages:
a. placing the food in a closed container;
b. providing a device for gas capture by adsorption, such as that of Claim 1;
c. providing a lid for the container, attaching the device for gas capture by adsorption thereto;
d. closing the container with the lid;
e. providing at least one layer of material that coats the lid and the part of the container in the vicinity of the lid;
f. providing thermal conditions in the container ranging from 2 to 20°C.
